# EUROPÄISCHE PATENTSCHRIFT

(11) **EP 2 409 582 B1**
(45) Veröffentlichungstag und Bekanntmachung des Hinweises auf die Patenterteilung: **08.10.2014**
(21) Anmeldenummer: 11164306.0
(22) Anmeldetag: 29.04.2011
(51) Int. Cl.: A23L 2/46, A23L 3/18, A23L 3/22

(54) **Vorrichtung und Verfahren zum Ausmischen und Wärmebehandeln eines flüssigen Produkts**
Device and method for mixing and thermally treating a liquid product
Dispositif et procédé de mélange et de traitement thermique d'un produit liquide

(30) Priorität: 16.07.2010 DE 102010031477
(43) Veröffentlichungstag der Anmeldung: 25.01.2012
(73) Patentinhaber: Krones AG, 93073 Neutraubling (DE)
(72) Erfinder: Runge, Torsten, 94315 Straubing (DE); Bobon, Siegfried, 59423 Unna (DE)
(74) Vertreter: Grünecker, Kinkeldey, Stockmair & Schwanhäusser

(56) Entgegenhaltungen:
- EP-A1- 0 247 245
- WO-A1-02/094040
- WO-A1-03/077685
- GB-A- 2 137 070
- US-A1- 2008 160 149
- US-A1- 2010 031 825

## Beschreibung

Die Erfindung betrifft eine Vorrichtung und ein Verfahren zum Ausmischen und Wärmebehandeln eines flüssigen Produkts, insbesondere eines Getränks.

Fertiggetränke können durch Zusammenführen eines Produktkonzentrats und einer Verdünnungsflüssigkeit, wie beispielsweise Wasser, in einem vorgegebenen Mischungsverhältnis sowohl im Batch-Betrieb als auch als kontinuierliche Teilproduktströme ausgemischt werden. Eine thermische Behandlung zur Gewährleistung einer bestimmten Haltbarkeit oder Produktqualität erfolgt meist nach dem Ausmischen des Produkts.

Bei dieser Vorgehensweise ist jedoch weder ein schnelles Anfahren noch ein schnelles Herunterfahren der Anlage bei einem Stillstand einer im Produktstrom nachfolgenden Fülleinheit möglich. Dies bedingt einen erheblichen apparativen Aufwand für Produktzwischenspeicher und/oder verursacht Produktverluste.

Alternativ schlägt die WO 02/094040 A1 vor, eine Verdünnungsflüssigkeit in einem ersten Wärmetauscher zu erhitzen, einen ersten Anteil der erhitzten Verdünnungsflüssigkeit mit einem Produktkonzentrat zu vermischen und diese Mischung in einem zweiten Wärmetauscher zu erhitzen. Die wärmebehandelte Mischung wird dann mit einem zweiten Anteil der zuvor erhitzten Verdünnungsflüssigkeit zusammengeführt, um das Produkt auszumischen.

Die US 4640840 A beschreibt eine Produktionsanlage zum thermischen Behandeln und Mischen zweier Komponenten eines flüssigen Lebensmittels, wie beispielsweise einer Suppe.

Beide Komponenten werden mittels Dampfinjektion in je einer zugeordneten Leitung thermisch behandelt und in einer Warmhaltevorrichtung auf einer jeweils zugeordneten Behandlungstemperatur gehalten. Nach Abkühlung werden die Produktkomponenten jeweils in einem Puffertank gespeichert. Die Ausgänge dieser Puffertanks führen zu einer Mischeinheit, in der das Endprodukt ausgemischt wird.

Die bedingt jedoch ebenfalls einen hohen apparativen Aufwand und kann die oben genannten Probleme bei einer Produktionsunterbrechung nicht zufriedenstellend lösen.

Es besteht daher Bedarf für ein in dieser Hinsicht verbessertes Verfahren und eine gegenüber dem Stand der Technik vereinfachte Vorrichtung.

Die gestellte Aufgabe wird mit einer Vorrichtung nach Anspruch 1 gelöst. Demnach umfasst diese eine erste Zuleitung zum Zuführen eines Produktkonzentrats; eine zweite Zuleitung zum Zuführen einer wässrigen Verdünnungsflüssigkeit zum Verdünnen des Produktkonzentrats; einen ersten Dampfinjektor, der an der ersten Zuleitung vorgesehen ist, um einen ersten Dampfmengenstrom in das Produktkonzentrat einzubringen; und einen zweiten Dampfinjektor, der an der zweiten Zuleitung vorgesehen ist, um einen zweiten Dampfmengenstrom in die Verdünnungsflüssigkeit einzubringen. Dadurch können das Produktkonzentrat und die Verdünnungsflüssigkeit gleichzeitig wärmebehandelt und verdünnt werden. Insbesondere das Produktkonzentrat kann dabei in eine für das Ausmischen besonders geeignete Konzentration verdünnt werden. Die Dampfinjektion lässt sich gut dosieren und bei einem Produktionsstillstand schnell unterbrechen, so dass unerwünscht lange Verweilzeiten des Produktkonzentrats bei hohen Temperaturen vermieden werden können. Die Dampfinjektion ermöglicht bei Bedarf einen Stop-And-Go-Betrieb, wodurch Produktpuffer entbehrlich werden oder zumindest nur in geringerem Umfang benötigt werden. Ferner können Produktverluste in Folge einer Produktüberhitzung vermieden werden. Die Dampfinjektoren können an ein gemeinsames Dampfversorgungssystem angeschlossen werden, wodurch der apparative Aufwand weiter reduziert werden kann. Insbesondere ist ein zusätzlicher Wärmetauscher für die Verdünnungsflüssigkeit entbehrlich.

Die erfindungsgemäße Vorrichtung umfasst ferner eine Mischeinrichtung zum Mischen des mittels des ersten Dampfinjektors mit Dampf beaufschlagten Produktkonzentrats und der mittels des zweiten Dampfinjektors mit Dampf beaufschlagten Verdünnungsflüssigkeit. Dadurch werden die auf diese Weise wärmebehandelten und verdünnten Teilproduktströme beim Zusammenführen in einem vorgegeben Mischungsverhältnis ausgemischt werden. Eine separate Ausmischanlage ist daher entbehrlich. Somit lässt sich Investitionskosten, Wartungskosten und Platzbedarf reduzieren. Ferner ist eine Einstelleinrichtung vorhanden, um den ersten und den zweiten Dampfmengenstrom einzustellen. Dadurch lässt sich eine Mindesttemperatur zur Wärmebehandlung im Konzentrat und in der Verdünnungsflüssigkeit einhalten sowie insbesondere in dem Konzentrat gleichzeitig eine für das Ausmischen geeignete Verdünnung einstellen.

Bei einer besonders günstige Ausgestaltung der erfindungsgemäßen Vorrichtung ist zwischen dem ersten Dampfinjektor und der Mischeinrichtung ein Messgerät zur Bestimmung der Konzentration eines für die Qualität des Produkts charakteristischen Inhaltsstoffs in dem mit Dampf beaufschlagten Produktkonzentrat vorgesehen, insbesondere zur Bestimmung eines Zuckergehalts. Damit kann die Konzentration des mit dem kondensierten ersten Dampfmengenstrom verdünnten Produktkonzentrats gemessen werden und ein für das nachfolgende Ausmischen günstiger Wertebereich eingehalten werden. Zu diesem Zweck kann beispielsweise der erste

Dampfmengenstrom in Abhängigkeit von der mit dem Konzentrationsmessgerät hinter dem ersten Dampfinjektor gemessenen Konzentration eingestellt werden.

Vorzugsweise ist zwischen dem ersten Dampfinjektor und der Mischeinrichtung und zwischen dem zweiten Dampfinjektor und der Mischeinrichtung jeweils ein Durchflussmessgerät und eine Temperaturmessgerät zur Überwachung des mit Dampf beaufschlagten Konzentrats und der mit Dampf beaufschlagten Verdünnungsflüssigkeit vorgesehen. Dadurch kann sowohl die Qualität der Wärmebehandlung als auch das Mischungsverhältnis im ausgemischten Produkt überwacht oder eingestellt werden.

Vorzugsweise ist ferner eine der Mischeinrichtung nach geschaltete Heißhalteeinrichtung vorgesehen. Dadurch kann eine Wärmebehandlung bis zum Erreichen einer gegebenenfalls erforderlichen Gesamtbehandlungsdauer verlängert werden. Somit kann die Wärmebehandlung auch bei einem unveränderten ersten Dampfmengenstrom an eine bestimmte Qualitätsanforderung, beispielsweise zur Pasteurisierung oder Sterilisierung, angepasst werden.

Die gestellte Aufgabe wird ferner mit einem Verfahren nach Anspruch 5 gelöst. Dieses umfasst folgende Schritte: a) Bereitstellen eines Produktkonzentrats; b) Bereitstellen einer wässrigen Verdünnungsflüssigkeit zum Verdünnen des Produktkonzentrats; c) Bereitstellen von Dampf; d) Einstellen eines ersten und eines zweiten Dampfmengenstroms; e) Einbringen eines ersten Dampfstroms in das bereit gestellte Produktkonzentrat, um dieses thermisch zu behandeln und zu verdünnen; und f) Einbringen eines zweiten Dampfstroms in die bereitgestellte Verdünnungsflüssigkeit, um diese thermisch zu behandeln und zu verdünnen. Die Dampfströme kondensieren und vermischen sich mit dem Produktkonzentrat und der Verdünnungsflüssigkeit zu wässrigen Mischphasen. Hierbei addieren sich die Massenströme des Produktkonzentrats und des ersten Dampfstroms zum Massenstrom einer ersten Mischphase, die Massenströme der Verdünnungsflüssigkeit und des zweiten Dampfstroms zum Massenstrom einer zweiten Mischphase. Beide Massenströme werden miteinander gemischt.

Somit können zwei Produktionsprozesse, nämlich eine thermische Behandlung und ein Einstellen einer für das Ausmischen geeigneten Verdünnung in einem Verfahren kombiniert werden.

Die Dampfinjektion eignet sich außerdem für eine Vielzahl unterschiedlicher Produkte, beispielsweise auch für faserhaltige Produkte oder solche mit Fruchtstücken.

Vorzugsweise werden das Produktkonzentrat und die Verdünnungsflüssigkeit als kontinuierliche Ströme bereit gestellt und parallel geschaltet mit Dampf beaufschlagt. Somit können beide Ströme gleichzeitig oder zumindest zeitlich überlappend behandelt und verdünnt werden. Die Ströme und die Dampfzufuhr können bei Bedarf schnell unterbrochen werden, um eine unerwünschte Erwärmung des Konzentrats zu vermeiden.

Bei einer besonders günstigen Ausgestaltung des Verfahrens wird die Konzentration eines für die Qualität des Produkts charakteristischen Inhaltsstoffs in dem mit Dampf beaufschlagten Produktkonzentrat, insbesondere zur Bestimmung eines Zuckergehalts, nach Kondensation des eingebrachten Dampfs gemessen. Somit kann der eingebrachte Dampfmengenstrom bei der Konzentrationsmessung auf einfache Weise berücksichtigt werden und die Konzentration mit hoher Genauigkeit gemessen werden. Vorzugsweise wird hierbei ein Brix-Wert gemessen.

Vorzugsweise werden ein Mengenstrom des mit Dampf beaufschlagten Produktkonzentrats und ein Mengenstrom der mit Dampf beaufschlagten Verdünnungsflüssigkeit jeweils nach Kondensation des eingebrachten Dampfs gemessen. Dadurch kann die eingebrachte Dampfmenge auf einfache Weise im Rahmen einer Summenmessung zusammen mit dem bereitgestellten Mengenstrom des Produktkonzentrats und der Verdünnungsflüssigkeit berücksichtigt werden. Es wäre jedoch auch möglich, den ersten und den zweiten Dampfmengenstrom jeweils gesondert zu messen, beispielsweise beim Einleiten in die Dampfinjektoren, ebenso die Mengenströme des Produktkonzentrats und der Verdünnungsflüssigkeit vor dem Einleiten des Dampfs.

Vorzugsweise wird das Verhältnis der Mengenströme in Abhängigkeit der im ausgemischten Produkt gemessenen Konzentration eines für die Qualität des Produkts charakteristischen Inhaltsstoffs, insbesondere eines Zuckergehalts, eingestellt. Dadurch lässt sich die Produktqualität während des Ausmischens fortlaufend an eine Vorgabe anpassen. Besonders geeignet als Kontrollparameter ist hierbei der Brix-Wert.

Vorzugsweise werden das mit Dampf beaufschlagte Konzentrat und die Verdünnungsflüssigkeit in Form erster und zweiter wässriger Mischphasen in einem vorgegeben Mischungsverhältnis, insbesondere als gemessenen Mengenströme, zusammen geführt, um das Produkt auszumischen. Dadurch lässt sich eine vorgegebene Produktqualität auf einfache Weise einstellen.

Bei einer vorteilhaften Ausgestaltung wird durch das Einbringen des Dampfes in dem Produktkonzentrat und in der Verdünnungsflüssigkeit eine Mindesttemperatur, insbesondere zur Pasteurisierung oder Sterilisierung des Produkts, erreicht. Dadurch wird eine separate Erwärmung des ausgemischten Produkts entbehrlich oder zumindest im Umfang reduziert. Folglich sinken auch Produktverluste aufgrund einer unerwünschten Überhitzung des fertig ausgemischten Produkts in Folge von Produktionsstillständen.

Vorzugsweise wird das ausgemischte Produkt unter Einhaltung einer Mindesttemperatur, insbesondere zur Pasteurisierung oder Sterilisierung des Produkts, heiß gehalten. Dadurch können auch Produkte, die eine vergleichsweise lange Behandlungszeit erfordern, mit einem hohen Durchsatz wärmebehandelt, verdünnt und ausgemischt werden. Somit lässt sich auch in diesen Fällen eine vorgegebene Ausmischung exakt einhalten.

Bei einer besonders günstigen Ausgestaltung des Verfahrens wird dem ausgemischten und wärmebehandelten Produkt entzogene Wärme zum Vorwärmen der Verdünnungsflüssigkeit zurück geführt. Dadurch lässt sich Wärmeenergie effizient zurück gewinnen und der bezüglich einer potentiellen Überhitzung unkritischen Verdünnungsflüssigkeit zuführen. Die Vorrichtung lässt sich somit kostengünstig und ohne Einschränkung der Produktqualität bei einem Produktionsstillstand betreiben.

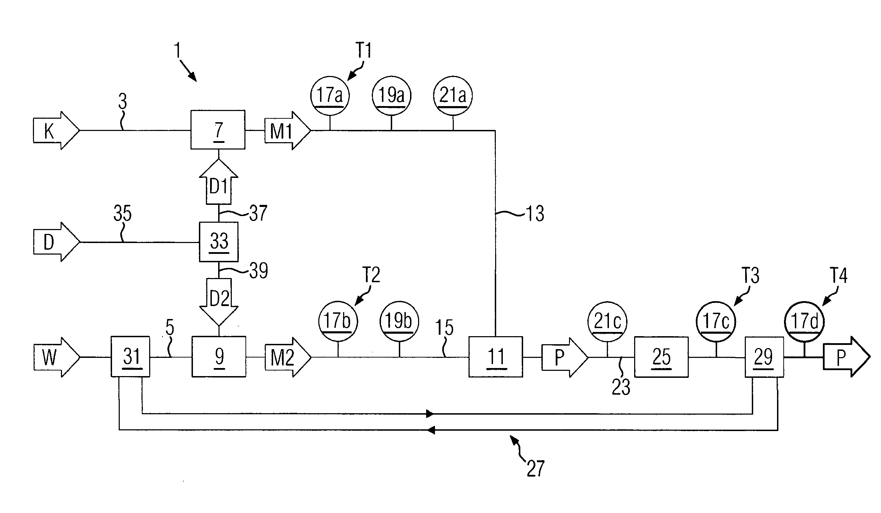

Eine bevorzugte Ausführungsform der erfindungsgemäßen Vorrichtung ist in der Zeichnung dargestellt. Die einzige Figur zeigt ein Schema der Vorrichtung.

Demnach umfasst die erfindungsgemäße Vorrichtung 1, die vorzugsweise ein kontinuierliches Ausmischen ermöglicht, eine erste Zuleitung 3 für ein Produktkonzentrat K und eine zweite Zuleitung 5 für eine Verdünnungsflüssigkeit W, wie beispielsweise Wasser. An den Zuleitungen 3, 5 ist jeweils ein Dampfinjektor 7, 9 zum Einbringen eines ersten Dampfstroms D1 in das Produktkonzentrat K und eines zweiten Dampfstroms D2 in die Verdünnungsflüssigkeit W vorgesehen. Die Dampfströme D1, D2 können das Produktkonzentrat K und die Verdünnungsflüssigkeit W auf Zieltemperaturen T1, T2 aufheizen. Letztere sind vorzugsweise gleich groß, können jedoch je nach Produkt P auch unterschiedlich sein. Die Dampfströme D1, D2 kondensieren und vermischen sich mit dem Produktkonzentrat K und der Verdünnungsflüssigkeit W zu wässrigen Mischphasen M1 und M2. Hierbei addieren sich die Massenströme des Produktkonzentrats K und des ersten Dampfstroms D1 zum Massenstrom der ersten Mischphase M1, die Massenströme der Verdünnungsflüssigkeit W und des zweiten Dampfstroms D2 zum Massenstrom der zweiten Mischphase M2.

Die Vorrichtung 1 umfasst ferner eine steuerbare Mischeinrichtung 11, die beispielsweise eine Düse oder ein Injektor sein kann, um die Mischphasen M1, M2 in einem einstellbaren Verhältnis zu einem fertig ausgemischten Produkt P zusammenzuführen. Die Injektoren 7, 9 sind mit der Mischeinrichtung 11 durch Verbindungsleitungen 13, 15 verbunden, wobei an diesen jeweils eine Temperaturmesseinrichtung 17a, 17b und ein Durchflussmesser 19a, 19b vorgesehen ist. Es versteht sich von selbst, dass die Mischeinrichtung 11 Abschnitte der Verbindungsleitungen 13, 15 umfassen kann, um an diesen oder im Bereich der Injektoren 7, 9 das Mischungsverhältnis der Mischphasen M1, M2 einzustellen.

An der Verbindungsleitung 13 für die Mischphase M1 ist ferner ein Konzentrationsmesser 21 a vorgesehen, um die Konzentration eines charakteristischen Inhaltsstoffs des Produkts P zu messen, wie beispielsweise einen Zuckergehalt, insbesondere den Brix-Wert der Mischphase M1. Ein entsprechender Konzentrationsmesser 21c ist an einer von der Mischeinrichtung 11 weg führenden Produktleitung 23 vorgesehen. Diese wiederum führt zu einer Heißhalteeinrichtung 25, deren Funktionsweise aus dem Stand der Technik bekannt ist und daher nicht näher beschrieben wird. Sie ist jedoch vorzugsweise so ausgebildet, dass eine Mindesttemperatur oder Zieltemperatur T3 zur Wärmebehandlung des Produkts P, wie im Bereich der Dampfinjektoren 7, 9, nicht unterschritten wird. Vorzugsweise ist zur Temperaturkontrolle ein weiterer Temperaturmesser 17c im Ausgangsbereich der Heißhaltevorrichtung 25 vorgesehen. Sind die Temperaturen T1 und T2 der Mischphasen M1 und M2 unterschiedlich, so ist die Temperatur T3 des ausgemischten Produkts P vorzugsweise eine Mischtemperatur zwischen T1 und T2.

Optional kann die erfindungsgemäße Vorrichtung 1 eine Wärmerückführeinrichtung 27 mit einem bezüglich des Produktstroms ausgangsseitigen Wärmetauscher 29 und einem eingangsseitigen Wärmetauscher 31 umfassen, um dem wärmebehandelten Produkt P vor der Abfüllung Wärme zu entziehen und der Verdünnungsflüssigkeit W vor dem Einleiten in den zweiten Injektor 9 zwecks Vorwärmung zuzuführen. Somit lässt sich Heizenergie zurück gewinnen, wobei die Vorwärmung der Verdünnungsflüssigkeit W bei einem Produktionsstillstand bezüglich der Produktqualität unkritischer ist als eine Vorwärmung des Konzentrats K, die prinzipiell in analoger Weise möglich wäre. Dargestellt ist ferner ein zugehöriger, ausgangsseitiger Temperaturmesser 17d zum Ermitteln einer ausgangsseitigen Produkttemperatur T4 stromabwärts des ausgangsseitigen Wärmetauschers 29.

Die Dampfmengenströme D1, D2, die vorzugsweise als Massenströme (Masse pro Zeiteinheit) definiert sind, können an den Injektoren 7, 9 oder an einer geeigneten Einstelleinrichtung 33 eingestellt werden. Im Beispiel wird diese von einer gemeinsamen Dampfleitung 35 versorgt und ist mit den Injektoren 7, 9 über Verteilerleitungen 37, 39 verbunden. Es versteht sich jedoch von selbst, dass für jeden Injektor 7, 9 eine getrennte Dampfversorgung möglich wäre. Entscheidend ist, dass die Dampfmengenströme D1, D2 eingestellt werden können, und dass die Injektoren 7, 9 im Parallelbetrieb mit Dampf D versorgt werden können, so dass sowohl das Produktkonzentrat K als auch die Verdünnungsflüssigkeit W im Wesentlichen gleichzeitig mit Dampf D beaufschlagt werden können.

Die Dampfmengenströme D1, D2 können derart eingestellt werden, dass eine für die Wärmebehandlung vorgegebene Mindesttemperatur T1, T2 im Produktkonzentrat K und in der Verdünnungsflüssigkeit W erreicht wird und dass das Produktkonzentrat K auf eine für das nachfolgende Ausmischen geeignete Konzentration verdünnt wird. Durch die Verdünnung lässt sich eine gewünschte Konzentration des ausgemischten Produkts P exakter einstellen.

Nicht dargestellt ist eine vorzugsweise vorgesehene Regeleinrichtung, die es ermöglicht, die Dampfmengenströme D1, D2 in Abhängigkeit von den Messergebnissen der Messeinrichtungen 17a, 17b, 19a, 19b und 21 a mit Hilfe der Injektoren 7, 9 und/oder der Einstelleinrichtung 33 einzustellen. Der Konzentrationsmesser 21 a könnte allerdings auch lediglich eine Kontrollfunktion haben. In die Regelung eingebunden ist vorzugsweise der ausgangsseitige Konzentrationsmesser 21 c für das ausgemischte Produkt P, um nicht nur die Dampfmengenströme D1, D2 zu überwachen und/oder einzustellen sondern auch die Mengenströme der Mischphasen M1, M2 für das Ausmischen des Produkts P in der Mischeinrichtung 11.

Mit der erfindungsgemäßen Vorrichtung 1 kann wie folgt gearbeitet werden:
Das Produktkonzentrat K könnte beispielsweise mit einem Brix-Wert von 40 bis 60°Bx und bei Raumtemperatur dem ersten Injektor 7 kontinuierlich zugeführt werden. Entsprechend könnte Frischwasser W als Verdünnungsflüssigkeit mit einer Temperatur von beispielsweise 10 bis 20°C kontinuierlich dem zweiten Injektor 9 zugeführt werden. Optional ist eine Vorwärmung in dem eingangsseitigen Wärmetauscher 31 denkbar. Der Mengenstrom des Frischwassers W könnte beispielsweise um das dreifache bis Vierfache höher sein als der Mengenstrom des Produktkonzentrats K, um einen Brix-Wert von beispielsweise 10°Bx im ausgemischten Produkt P einzustellen.

Über die Dampfleitung 35 wird Wasserdampf D beispielsweise unter einem Überdruck von 2 bar bereitgestellt und auf den ersten und zweiten Dampfmengenstrom D1, D2 verteilt, wobei der zweite Dampfmengenstrom D2 beispielsweise um das Vierfache bis Sechsfache größer sein könnte als der erste Dampfmengenstrom D1.

Die Dampfströme D1, D2 werden kontinuierlich und gleichzeitig in die Injektoren 7, 9 geleitet und das Produktkonzentrat K und das Frischwasser W mit Dampf D beaufschlagt. Hierdurch lässt sich beispielsweise eine Behandlungstemperatur T1, T2 von 80 bis 140°C, vorzugsweise von 90 bis 100°C, in oder hinter den Injektoren 7, 9 erreichen und mit den Temperaturmessern 17a, 17b überwachen.

Nach Kondensation des Dampfes D in den Injektoren 7, 9 und/oder den Verbindungsleitungen 13, 15 kann der Durchfluss durch die Verbindungsleitungen 13, 15 gemessen werden. In Kombination mit der Konzentrationsmessung in der Mischphase M1, bei der beispielsweise eine Reduzierung des Brix-Werts um 10% gegenüber der Ausgangskonzentration des Produktkonzentrats K festgestellt werden könnte, lässt sich durch Einstellen der Mengenströme der Mischphasen M1, M2 der gewünschte Konzentrationswert des ausgemischten Produkts P einstellen. Hierbei ermöglicht der Konzentrationsmesser 21c eine kontinuierliche Überwachung des ausgemischten Produkts P und eine gegebenenfalls notwendige Korrektur der Mengenströme D1, D2, M1 und/oder M2. Selbstverständlich lassen sich auch die Mengenströme des zugeführten Konzentrats K und der Verdünnungsflüssigkeit W auf dieser Grundlage verändern.

Das ausgemischte Produkt P kann kontinuierlich einer Kühleinheit, einem gegebenenfalls nachfolgenden Puffertank und schließlich einer Füllmaschine zugeführt werden.

Bei einem Produktionsstillstand, insbesondere in der Fülleinheit, kann sowohl die Dampfzufuhr D als auch die Zufuhr des Produktkonzentrats K und der Verdünnungsflüssigkeit W schnell unterbrochen werden, so dass eine unerwünschte Erwärmung in der Vorrichtung 1 stehenden Produktkonzentrats K oder einer Mischphase, wie beispielsweise der Mischphase M1, oder des ausgemischten Produkts P vermieden werden kann. Im Gegensatz zu einem Wärmeübergang in herkömmlichen Wärmetauschern reagiert die erfindungsgemäße Vorrichtung 1 nahezu verzögerungsfrei und erübrigt einen zusätzlichen Produktrückführkreislauf während eines Produktionsstillstands und/oder vermeidet Qualitätseinbußen durch eine übermäßige Erwärmung vom Produktbestandteilen.

Die erfindungsgemäße Vorrichtung 1 und das erfindungsgemäße Verfahren eignen sich für eine Vielzahl flüssiger Produkte, insbesondere für handelsübliche Getränke, wie beispielsweise Fruchtsäfte und dergleichen.

## Patentansprüche

1. Vorrichtung (1) zum Ausmischen und Wärmebehandeln eines flüssigen Produkts (P), insbesondere eines Getränks, mit:
- einer ersten Zuleitung (3) zum Bereitstellen eines Produktkonzentrats (K);
- einer zweiten Zuleitung (5) zum Bereitstellen einer wässrigen Verdünnungsflüssigkeit (W) zum Verdünnen des Produktkonzentrats;
- einem ersten Dampfinjektor (7), der an der ersten Zuleitung vorgesehen ist, um einen ersten Dampfmengenstrom (D1) in das Produktkonzentrat einzubringen; und
- einem zweiten Dampfinjektor (9), der an der zweiten Zuleitung vorgesehen ist, um einen zweiten Dampfmengenstrom (D2) in die Verdünnungsflüssigkeit einzubringen, und
- einer Einstelleinrichtung (33), um den ersten und den zweiten Dampfmengenstrom (D1, D2) einzustellen, und einer Mischeinrichtung (11) zum Mischen des mittels des ersten Dampfinjektors (7) mit Dampf (D1) beaufschlagten Produktkonzentrats (K) und der mittels des zweiten Dampfinjektors (9) mit Dampf (D2) beaufschlagten Verdünnungsflüssigkeit (W).

2. Vorrichtung nach Anspruch 1, bei der zwischen dem ersten Dampfinjektor (7) und der Mischeinrichtung (11) ein Messgerät (21a) zur Bestimmung der Konzentration eines für die Qualität des Produkts (P) charakteristischen Inhaltsstoffs in dem mit Dampf beaufschlagten Produktkonzentrat (M1) vorgesehen ist, insbesondere zur Bestimmung eines Zuckergehalts.

3. Vorrichtung nach Anspruch 1 oder 2, bei der zwischen dem ersten Dampfinjektor (7) und der Mischeinrichtung (11) und zwischen dem zweiten Dampfinjektor (9) und der Mischeinrichtung (11) jeweils ein Durchflussmessgerät (19a, 19b) und eine Temperaturmessgerät (17a, 17b) zur Überwachung des mit Dampf beaufschlagten Konzentrats (M1) und der mit Dampf beaufschlagten Verdünnungsflüssigkeit (M2) vorgesehen ist.

4. Vorrichtung nach Anspruch 2 oder 3, bei der ferner eine der Mischeinrichtung (11) nachgeschaltete Heißhalteeinrichtung (25) vorgesehen ist.

5. Verfahren zum Ausmischen und Wärmebehandeln eines flüssigen Produkts (P), insbesondere eines Getränks, mit folgenden Schritten:
a) Bereitstellen eines Produktkonzentrats (K);
b) Bereitstellen einer wässrigen Verdünnungsflüssigkeit (W) zum Verdünnen des Produktkonzentrats;
c) Bereitstellen von Dampf (D);
d) Einstellen eines ersten und eines zweiten Dampfmengenstroms (D1, D2);
e) Einbringen des ersten Dampfmengenstroms (D1) in das bereit gestellte Produktkonzentrat, um dieses thermisch zu behandeln und zu verdünnen; und
f) Einbringen des zweiten Dampfmengenstroms (D2) in die bereitgestellte Verdünnungsflüssigkeit, um diese thermisch zu behandeln und zu verdünnen,
wobei das mit Dampf (D) beaufschlagte Produktkonzentrat (K) und die mit Dampf (D) beaufschlagte Verdünnungsflüssigkeit (W) in Form erster und zweiter wässriger Mischphasen (M1, M2) in einem vorgegeben Mischungsverhältnis, insbesondere als nach Kondensation des Dampfes (D) gemessenen Mengenströme, zusammen geführt werden, um das Produkt (P) auszumischen.

6. Verfahren nach Anspruch 5, bei dem das Produktkonzentrat (K) und die Verdünnungsflüssigkeit (W) als kontinuierliche Ströme bereit gestellt werden und parallel geschaltet mit Dampf (D) beaufschlagt werden.

7. Verfahren nach Anspruch 5 oder 6, bei dem die Konzentration eines für die Qualität des Produkts charakteristischen Inhaltsstoffs in dem mit Dampf (D) beaufschlagten Produktkonzentrat (K), insbesondere zur Bestimmung eines Zuckergehalts, nach Kondensation des eingebrachten Dampfs (D) gemessen wird.

8. Verfahren nach wenigstens einem der Ansprüche 5 bis 7, bei dem ein erster Mengenstrom des mit Dampf beaufschlagten Produktkonzentrats (M1) und ein zweiter Mengenstrom der mit Dampf beaufschlagten Verdünnungsflüssigkeit (M2) jeweils nach Kondensation des eingebrachten Dampfs (D) gemessen wird.

9. Verfahren nach Anspruch 8, bei dem das Verhältnis des ersten und zweiten Mengenstroms in Abhängigkeit der im ausgemischten Produkt (P) gemessenen Konzentration eines für die Qualität des Produkts charakteristischen Inhaltsstoffs, insbesondere eines Zuckergehalts, eingestellt wird.

10. Verfahren nach wenigstens einem der Ansprüche 5 bis 9, bei dem durch das Einbringen des Dampfes (D) in dem Produktkonzentrat (K) und in der Verdünnungsflüssigkeit (W) eine Mindesttemperatur (T1, T2), insbesondere zur Pasteurisierung oder Sterilisierung des Produkts (P), erreicht wird.

11. Verfahren nach wenigstens einem der Ansprüche 5 bis 10, bei dem das ausgemischte Produkt (P) unter Einhaltung einer Mindesttemperatur (T3), insbesondere zur Pasteurisierung oder Sterilisierung des Produkts, heiß gehalten wird.

12. Verfahren nach wenigstens einem der Ansprüche 5 bis 11 bei dem dem ausgemischten und wärmebehandelten Produkt (P) entzogene Wärme zum Vorwärmen der Verdünnungsflüssigkeit (W) zurück geführt wird.

## Claims

1. Device (1) for mixing and heat treating a liquid product (P), in particular a beverage, having:
- a first supply pipe (3) for providing a product concentrate (K);
- a second supply pipe (5) for providing an aqueous dilution liquid (W) for diluting the product concentrate;
- a first steam injector (7) provided at the first supply pipe to introduce a first steam quantity flow (D1) into the product concentrate; and
- a second steam injector (9) provided at the second supply pipe to introduce a second steam quantity flow (D2) into the dilution liquid, and
- an adjustor (33) to adjust the first and the second steam quantity flows (D1, D2), and a mixing means (11) for mixing the product concentrate (K) to which steam (D1) was admitted by means of the first steam injector (7), and the dilution liquid (W) to which steam (D2) was admitted by means of the second steam injector (9).

2. Device according to claim 1, wherein between the first steam injector (7) and the mixing means (11), a measuring device (21 a) for determining the concentration of an ingredient characteristic of the quality of the product (P) in the product concentrate (M1) to which steam was admitted is provided, in particular for determining the sugar content.

3. Device according to claim 1 or 2, wherein between the first steam injector (7) and the mixing means (11), and between the second steam injector (9) and the mixing means (11), one flow meter (19a, 19b) and one temperature measuring device (17a, 17b) each are provided to monitor the concentrate (M1) to which steam was admitted and the dilution liquid (M2) to which steam was admitted.

4. Device according to claim 2 or 3, wherein furthermore a heat retention means (25) connected downstream of the mixing means (11) is provided.

5. Method (1) for mixing and heat treating a liquid product (P), in particular a beverage, comprising the steps of:
a) providing a product concentrate (K);
b) providing an aqueous dilution liquid (W) for diluting the product concentrate;
c) providing steam (D);
d) adjusting a first and a second steam quantity flow (D1, D2);
e) introducing the first steam quantity flow (D1) into the provided product concentrate to thermally treat and dilute the latter;
f) introducing the second steam quantity flow (D2) into the provided dilution liquid to thermally treat and dilute the latter,
wherein the product concentrate (K) to which steam (D) was admitted, and the dilution liquid (W) to which steam (D) was admitted are brought together in the form of first and second aqueous mixing phases (M1, M2) in a predetermined mixing ratio, in particular as quantity flows measured upon condensation of the steam (D), to mix the product (P).

6. Method according to claim 5, wherein the product concentrate (K) and the dilution liquid (W) are provided as continuous flows to which steam is admitted (D) in parallel.

7. Method according to claim 5 or 6, wherein the concentration of an ingredient characteristic of the quality of the product in the product concentrate (K) to which steam (D) was admitted is measured upon condensation of the introduced steam (D), in particular to determine the sugar content.

8. Method according to at least one of claims 5 to 7, wherein a first quantity flow of the product concentrate (M1) to which steam was admitted and a second quantity flow of the dilution liquid (M2) to which steam was admitted is measured each upon condensation of the introduced steam (D).

9. Method according to claim 8, wherein the ratio of the first to the second quantity flow is adjusted depending on the concentration of an ingredient characteristic of the quality of the product, in particular the sugar content, measured in the mixed product (P).

10. Method according to at least one of claims 5 to 9, wherein by the introduction of the steam (D) into the product concentrate (K) and into the dilution liquid (W), a minimum temperature (T1, T2) is reached in particular for pasteurization or sterilization of the product (P).

11. Method according to at least one of claims 5 to 10, wherein the mixed product (P) is kept warm retaining a minimum temperature (T3), in particular for pasteurization or sterilization of the product.

12. Method according to at least one of claims 5 to 11, wherein heat withdrawn from the mixed and heat treated product (P) is returned for heating the dilution liquid (W).

## Revendications

1. Dispositif (1) de mélange et de traitement thermique d'un produit liquide (P), notamment d'une boisson, comprenant
- une première conduite d'alimentation (3) pour la fourniture d'un concentré de produit (K) ;
- une deuxième conduite d'alimentation (5) pour la fourniture d'un liquide de dilution aqueux (W) pour diluer le concentré de produit ;
- un premier injecteur de vapeur (7), qui est prévu sur la première conduite d'alimentation, en vue d'introduire un premier flux quantitatif de vapeur (D1) dans le concentré de produit ; et
- un deuxième injecteur de vapeur (9), qui est prévu sur la deuxième conduite d'alimentation, en vue d'introduire un deuxième flux quantitatif de vapeur (D2) dans le liquide de dilution, et
- un dispositif de réglage (33) pour régler le premier et le deuxième flux quantitatif de vapeur (D1, D2),
- et un dispositif mélangeur (11) pour mélanger le concentré de produit (K) ayant été alimenté en vapeur (D1) au moyen du premier injecteur de vapeur (7), et le liquide de dilution (W) ayant été alimenté en vapeur (D2) au moyen du deuxième injecteur de vapeur (9).

2. Dispositif selon la revendication 1, dans lequel entre le premier injecteur de vapeur (7) et le dispositif mélangeur (11), il est prévu un appareil de mesure (21a) pour déterminer la concentration d'une substance constituante caractéristique pour la qualité du produit (P) dans le concentré de produit (M1) ayant été alimenté en vapeur, notamment pour déterminer une teneur en sucre.

3. Dispositif selon la revendication 1 ou la revendication 2, dans lequel entre le premier injecteur de vapeur (7) et le dispositif mélangeur (11), et entre le deuxième injecteur de vapeur (9) et le dispositif mélangeur (11), il est prévu respectivement un appareil de mesure de débit (19a, 19b) et un appareil de mesure de température (17a, 17b) pour surveiller le concentré de produit (M1) ayant été alimenté en vapeur et le liquide de dilution (M2) ayant été alimenté en vapeur.

4. Dispositif selon la revendication 2 ou la revendication 3, dans lequel il est en outre prévu un dispositif de maintien au chaud (25) placé en aval du dispositif mélangeur (11).

5. Procédé pour assurer le mélange et un traitement thermique d'un produit liquide (P), notamment d'une boisson, comprenant les étapes suivantes :
a) fourniture d'un concentré de produit (K) ;
b) fourniture d'un liquide de dilution aqueux (W) pour diluer le concentré de produit ;
c) fourniture de vapeur (D) ;
d) réglage d'un premier et d'un deuxième flux quantitatif de vapeur (D1, D2) ;
e) introduction du premier flux quantitatif de vapeur (D1) dans le concentré de produit fourni, pour assurer le traitement thermique et la dilution de celui-ci ; et
f) introduction du deuxième flux quantitatif de vapeur (D2) dans le liquide de dilution fourni, pour assurer le traitement thermique et la dilution de celui-ci,
le concentré de produit (K) ayant été alimenté en vapeur (D) et le liquide de dilution (W) ayant été alimenté en vapeur (D) étant réunis sous la forme de deux phases aqueuses de mélange (M1, M2) selon une proportion de mélange prescrite, notamment en tant que flux quantitatifs mesurés après condensation de la vapeur (D), en vue d'assurer le mélange du produit (P).

6. Procédé selon la revendication 5, d'après lequel le concentré de produit (K) et le liquide de dilution (W) sont fournis en tant que flux continus et sont alimentés en vapeur (D) en étant acheminés en parallèle.

7. Procédé selon la revendication 5 ou la revendication 6, d'après lequel on mesure la concentration d'une substance constituante caractéristique pour la qualité du produit dans le concentré de produit (K) ayant été alimenté en vapeur (D), notamment pour déterminer une teneur en sucre, après la condensation de la vapeur (D) ayant été introduite.

8. Procédé selon l'une au moins des revendications 5 à 7, d'après lequel on mesure un premier flux quantitatif du concentré de produit (M1) ayant été alimenté en vapeur, et un deuxième flux quantitatif du liquide de dilution (M2) ayant été alimenté en vapeur, respectivement après la condensation de la vapeur (D) ayant été introduite.

9. Procédé selon la revendication 8, d'après lequel on règle la proportion du premier et du deuxième flux quantitatif en fonction de la concentration d'une substance constituante caractéristique pour la qualité du produit, notamment d'une teneur en sucre, mesurée dans le produit (P) ayant été mélangé.

10. Procédé selon l'une au moins des revendications 5 à 9, d'après lequel grâce à l'introduction de la vapeur (D), on atteint dans le concentré de produit (K) et dans le liquide de dilution (W), au minimum une température (T1, T2), notamment pour la pasteurisation ou la stérilisation du produit (P).

11. Procédé selon l'une au moins des revendications 5 à 10, d'après lequel le produit (P) ayant été mélangé est maintenu chaud, en respectant au minimum une température (T3), notamment pour la pasteurisation ou la stérilisation du produit.

12. Procédé selon l'une au moins des revendications 5 à 11, d'après lequel de la chaleur soutirée au produit (P) ayant été mélangé et ayant subi un traitement thermique, est recyclée pour le préchauffage du liquide de dilution (W).
